# EUROPÄISCHE PATENTSCHRIFT

(11) **EP 0 925 870 B1**
(45) Veröffentlichungstag und Bekanntmachung des Hinweises auf die Patenterteilung: **06.07.2005**
(21) Anmeldenummer: 98124509.5
(22) Anmeldetag: 22.12.1998
(51) Int. Cl.: B23Q 1/48, B23Q 1/54, B25J 9/10

(54) **Vorrichtung zur Positionierung eines ersten Maschinenteils gegenüber einem zweiten Maschinenteil**
Device for positioning a first machine part relative to a second machine part
Dispositif de positionnement d'une première partie d'une machine par rapport à une deuxième partie de cette machine

(30) Priorität: 24.12.1997 DE 19757885
(43) Veröffentlichungstag der Anmeldung: 30.06.1999
(73) Patentinhaber: Wissner, Rolf, Dipl.-Ing., 37079 Göttingen (DE)
(72) Erfinder: Wissner, Rolf, Dipl.-Ing., 37079 Göttingen (DE)
(74) Vertreter: Rehberg Hüppe + Partner

(56) Entgegenhaltungen:
- EP-A- 0 674 969
- WO-A-97/33725
- DE-A- 19 614 641
- US-A- 4 762 459
- US-A- 4 790 718
- US-A- 5 787 758

## Beschreibung

Die Erfindung bezieht sich auf eine Vorrichtung zur Positionierung eines ersten Maschinenteils gegenüber einem zweiten Maschinenteil, wobei mindestens drei Positionierelemente in verschiedenen Punkten an dem zweiten Maschinenteil im Raum verschwenkbar gelagert sind, wobei die Positionierelemente an dem ersten Maschinenteil angreifen und auf eine lineare Längenänderung zwischen dem ersten und dem zweiten Maschinenteil ansteuerbar sind und wobei eine Führung für das erste Maschinenteil gegenüber dem zweiten Maschinenteil vorgesehen ist.

Bei den Maschinenteilen kann es sich um Teile einer Werkzeugmaschine handeln. So kann z. B. das erste Maschinenteil die Halterung für einen Laser oder eine ein Werkzeug tragende Spindel sein, während das zweite Maschinenteil der Rahmen der Werkzeugmaschine oder direkt ein ein Werkstück tragender Tisch ist.

Traditionell werden zur Positionierung eines ersten Maschinenteils gegenüber einem zweiten Maschinenteil kreuzweise angeordnete und hintereinandergeschaltete lineare Positioniereinrichtungen verwendet. Die serielle Anordnung der Positioniereinrichtungen weist jedoch den Nachteil auf, daß die direkt an dem zweiten Maschinenteil gelagerte Positioniereinrichtung nicht nur das erste Maschinenteil sondern auch noch die ihr nachgeschalteten Positioniereinrichtungen positionieren muß. Das heißt, die von dieser Positioniereinrichtung zu positionierende Masse ist erheblich größer als die entsprechende Masse bei der letzten Positioniereinrichtung der Reihe, die nur das erste Maschinenteil selbst positionieren muß. Hierdurch ergeben sich recht früh kinematische Grenzen für die Beschleunigung des zweiten Maschinenteils gegenüber dem ersten Maschinenteil. Hohe Beschleunigungen des ersten Maschinenteils gegenüber dem zweiten Maschinenteil sind jedoch für verschiedene mit einer Werkzeugmaschine durchzuführende Bearbeitungsverfahren evident und auch für die Erreichung kurzer Bearbeitungszeiten von grundsätzlicher Bedeutung.

Als Vorrichtungen zur Positionierung eines ersten Maschinenteils gegenüber einem zweiten Maschinenteil mit parallel zueinander angeordneten Positioniereinrichtungen sind sogenannte Hexapoden bekannt. Ein Hexapode ist beispielsweise in der US-PS 5 575 597 beschrieben. Ein Hexapode weist typischerweise 6 Positioniereinrichtungen zwischen dem ersten Maschinenteil und dem zweiten Maschinenteil auf, die in jeweils 3 äquidistanten Punkten an dem ersten Maschinenteil und dem zweiten Maschinenteil verschwenkbar gelagert sind. Die Punkte der Lagerung an dem ersten Maschinenteil sind gegenüber den Punkten der Lagerung an dem zweiten Maschinenteil in einer Grundstellung des Hexapoden um 60° verdreht zueinander angeordnet, wobei zwischen jedem Punkt der Lagerung an dem ersten Maschinenteil und den zwei nächstbenachbarten Punkten der Lagerung an dem zweiten Maschinenteil jeweils eine Positioniereinrichtung angeordnet ist. Bei den Positioniereinrichtungen handelt es sich um Positionierelemente, die auf eine lineare Längenänderungen zwischen dem ersten und dem zweiten Maschinenteil ansteuerbar sind, beispielsweise um Kugelgewindetriebe oder Lineardirektantriebe. Ein Hexapode ist durch die notwendige Anzahl von 6 Positionierelementen bereits vom Aufbau her aufwendig. Weiterer Aufwand muß für die Steuerung des Hexapoden betrieben werden, da kein einzelnes Positionierelement separat angesteuert werden kann. Jede Längenänderung eines einzelnen Positionierelements muß mit Längenänderungen weiterer Positionierelemente einhergehen. Darüberhinaus ist der Verfahrbereich des ersten Maschinenteils gegenüber dem zweiten Maschinenteil bei einem Hexapoden relativ klein. Insbesondere sind die Grenzflächen dieses Verfahrbereichs ungünstig angeordnet, so daß beispielsweise ein maximaler kubischer Ausschnitt aus dem Verfahrbereich ein noch kleineres Volumen aufweist.

Eine Vorrichtung zur Positionierung eines ersten Maschinenteils gegenüber einem zweiten Maschinenteil, bei der drei Positionierelemente in verschiedenen Punkten an dem zweiten Maschinenteil im Raum verschwenkbar gelagert sind, bei der die Positionierelemente an dem ersten Maschinenteil angreifen und auf eine lineare Längenänderung zwischen dem ersten und dem zweiten Maschinenteil ansteuerbar sind und bei der eine Führung für das erste Maschinenteil gegenüber dem zweiten Maschinenteil vorgesehen ist, ist aus dem Informationsblatt "Entwicklung eines Parallelroboters für die Laserbearbeitung" von Dipl.-Ing. Christian Soehner (Produktionstechnische Institute auf der EMO, EMO Hannover 10.-17.09.1997, Sonderschau in Halle 8: Forschung und Entwicklung für den Werkzeugmaschinenbau) bekannt. Die Vorrichtung weist drei Positionierelemente auf, die in äquidistanten Punkten an dem zweiten Maschinenteil im Raum verschwenkbar gelagert sind. Die Positionierelemente greifen an drei wiederum äquidistanten Punkten an dem ersten Maschinenteil an, an dem sie ebenfalls im Raum verschwenkbar gelagert sind. Bei den Positionierelementen kann es sich um Kugelgewindetriebe oder Lineardirektantriebe handeln. Die Führung für das erste Maschinenteil gegenüber dem zweiten Maschinenteil weist ein zweiachsiges Gelenk auf, über das eine Stütze für das erste Maschinenteil an dem zweiten Maschinenteil geführt ist. Die Stütze ist nicht nur um die beiden Achsen des Gelenks verschwenkbar, sondern auch in ihrer Haupterstreckungsrichtung durch den Kreuzungspunkt der beiden Achsen verschiebbar. Die Führung beläßt dem starr an der Stütze angeordneten ersten Maschinenteil drei Bewegungsfreiheitsgrade, so daß das erste Maschinenteil mit den drei Positionierelementen an jeden Ort innerhalb eines dreidimensionalen Verfahrbereichs verfahren werden. Dabei wird jedoch das erste Maschinenteil gegenüber dem zweiten Maschinenteil um die beiden Achsen des zweiachsigen Gelenks verkippt. Dies ist bei der Positionierung eines Werkzeugs oder Laserstrahls unerwünscht und muß daher mit einem ansteuerbaren zweiachsigen Handgelenk kompensiert werden, über das das Werkzeug bzw. eine das Werkzeug tragende Spindel oder der Laser an dem ersten Maschinenteil gelagert ist. Die Ansteuerung des zweiachsigen Handgelenks zur Kompensation der Verschwenkung des ersten Maschinenteils gegenüber dem zweiten Maschinenteil ist aufwendig. Erheblicher mechanischer Aufwand fällt für das zweiachsige Gelenk mit der zusätzlichen Verschiebbarkeit für die Stütze und für das ansteuerbare zweiachsige Handgelenk an dem ersten Maschinenteil an.

Aus der WO 97/33725 sind Vorrichtungen bekannt, bei denen eine Führung zwischen zwei Bauteilen zwei zweistufige Parallelogrammlenkeranordnungen mit um parallel zueinander verlaufende Schwenkachsen verschwenkbaren Parallelogrammlenkern aufweist, die jeweils als ganzes um eine zu den Schwenkachsen der Parallelogrammlenker senkrecht verlaufende Schwenkachse verschwenkbar an dem einen Bauteil gelagert sind und an deren freien Enden das andere Bauteil angeordnet ist. Weiterhin weisen diese Vorrichtungen drei Positionierelemente auf, die jeweils aus einem fest an dem einen Bauteil gelagerten Drehantrieb, einem mit dem Drehantrieb verschwenkbaren Schwenkarm und einem an dem freien Ende des Schwenkarms einerseits und dem anderen Bauteil andererseits frei im Raum verschwenkbar gelagerten Koppelglied bestehen. Mit dem Drehantrieben ist keine genaue Positionierung der beiden Bauteile relativ zueinander möglich, da ihnen ein großer Hebelarm nachgeschaltet ist. Zudem sind die Auswirkungen der Einstellungen der Drehantriebe auf die relative Positionierung der beiden Bauteile in komplizerter Weise wechselseitig abhängig.

Eine Vorrichtung zur Positionierung eines ersten Maschinenteils gegenüber einem zweiten Maschinenteils gegenüber einem zweiten Maschinenteil mit den Merkmalen des Oberbegriffs des Anspruchs 1 ist aus der US-A-4,762,459 bekannt. Konkret handelt es sich dort um eine Vorrichtung zur Parallelführung einer Kamera gegenüber einem Untergrund. Hierzu ist eine zweistufige und doppelte Parallelogrammlenkerführung vorgesehen. Zwischen jedem Paar von Querlenkern der Parallelogrammlenkerführung sind insgesamt vier Parallelogrammlenker vorgesehen, die gegenüber jedem der Querlenker um zwei zueinander orthogonale und orthogonal zu der Haupterstreckungsrichtung der Parallelogrammlenker verlaufende Schwenkachsen verschwenkbar sind. Mit anderen Worten kann jeder Parallelogrammlenker gegenüber seiner Lagerung an einem seiner Enden frei im Raum verschwenkt werden. Durch die beiden Freiheitsgrade der Verschwenkung jedes einzelnen Parallelogrammlenkers ist die Stellung der gesamten Parallelogrammlenkeranordnung im Raum bezogen auf eine bestimmte Stellung des ersten Maschinenteils gegenüber dem zweiten Maschinenteil nicht eindeutig. Die Parallelogrammführung kann viel mehr in sich verschwenkt werden, ohne dass dies eine Positionsveränderung des ersten Maschinenteils zu dem zweiten Maschinenteil erfordert oder zur Folge hat.

Aus der EP-A-0 674 969 ist eine Vorrichtung zur Positionierung eines ersten Maschinenteils gegenüber einem zweiten Maschinenteil mit mindestens drei Positionierelementen und zwei Teilführungen zwischen dem ersten Maschinenteil und dem zweiten Maschinenteil bekannt. Jede der Teilführungen weist mindestens ein Paar von zwei Parallelogrammlenkern auf, die an ihren beiden Enden um zwei zueinander orthogonal und orthogonal zu ihren Haupterstreckungsrichtungen verlaufende Schwenkachsen verschwenkbar gelagert sind. Diese Parallelogrammlenker sind mit keiner weiteren Parallelogrammlenkeranordnung in Reihe geschaltet, sondern an dem ersten Maschinenteil einerseits und an einem Ende eines Klappenelements gelagert, das seinerseits um eine feste Schwenkachse verschwenkbar an dem zweiten Maschinenteil gelagert ist.

Der Erfindung liegt die Aufgabe zugrunde, eine Vorrichtung zur Positionierung eines ersten Maschinenteils gegenüber einem zweiten Maschinenteil mit den Merkmalen des Oberbegriffs des Anspruchs 1 aufzuzeigen, bei der die Führung aus weniger und mechanisch einfacheren Einzelbestandteilen zusammengesetzt ist.

Erfindungsgemäß wird diese Aufgabe durch die Merkmale des Anspruchs 1 gelöst.

Vorteilhafte Ausführungsformen der erfindungsgemäßen Vorrichtung sind in den Unteransprüchen 2 bis 10 beschrieben.

Dabei kann das erste Maschinenteil selbst den äußersten Parallelogrammlenker der Parallelogrammlenkeranordnung ausbilden. Unter eine zweistufigen Parallelogrammlenkeranordnung ist eine Parallelogrammlenkeranordnung zu verstehen, bei der mindestens zwei in Reihe geschaltete Paare von Parallelogrammlenkern zwischen dem ersten und dem zweiten Maschinenteil angeordnet sind. Ein solche Parallelogrammlenkeranordnung erlaubt ein Verfahren des ersten Maschinenteils gegenüber dem zweiten Maschinenteil in der senkrecht zu den Schwenkachsen der Parallelogrammlenker verlaufenden Ebene. Die Verfahrbarkeit ist dabei auf lineare Bewegungen beschränkt. Ein Verkippen des ersten Maschinenteils gegenüber dem zweiten Maschinenteil in der Ebene wird durch die Parallelogrammlenkeranordnung verhindert. Eine dritte Dimension für die Verfahrbarkeit des ersten Maschinenteils gegenüber dem zweiten Maschinenteil ergibt sich durch die zu den Schwenkachsen der Parallelogrammlenker senkrecht verlaufende Schwenkachse, um die die gesamte Parallelogrammlenkeranordnung verschwenkbar an dem zweiten Maschinenteil gelagert ist. Die resultierende Verfahrbarkeit des ersten Maschinenteils gegenüber dem zweiten Maschinenteil beinhaltet zwar auch eine Schwenkkomponente um eine parallel zu der Schwenkachse der gesamten Parallelogrammlenkeranordnung verlaufenden Achse. Diese Achse fällt jedoch typischerweise mit einer Symmetrieachse des ersten Maschinenteils, beispielsweise der optischen Achse eines Lasers oder der Rotationsachse eines Werkzeugs zusammen und ist daher unerheblich. In jedem Fall erlaubt die Schwenkachse der gesamten Parallelogrammführung kein Verschwenken des ersten Maschinenteils gegenüber dem zweiten Maschinenteil in der senkrecht zu den Schwenkachsen der Parallelogrammlenker verlaufenden Ebene.

Bei der neuen Vorrichtung sind typischerweise drei oder vier Positionierelemete vorgesehen. Drei Positionierelemente sind ausreichend, da das erste Maschinenteil starr an dem freien Ende einer Parallelogrammlenkeranordnung angeordnet ist. Die noch mögliche Bewegung des ersten Maschinenteils gegenüber dem zweiten Maschinenteil Weist drei Freiheitsgrade auf, die von drei Positionierelementen abgedeckt werden können.

Sämtliche Positionierelemente können in einer senkrecht zu der Schwenkachse der gesamten Parallelogrammlenkeranordnung verlaufenden Ebene liegen. Zumindest sollten die den drei linearen Bewegungsrichtungen zugeordneten Positionierelemente in einer solchen Ebene äquidistant angeordnet sein, um bei der Ansteuerung der Positionierelemente möglichst viele Symmetrien ausnutzen zu können.

Um die Steifigkeit der Führung für das erste Maschinenteil gegenüber dem zweiten Maschinenteil zu erhöhen, können zwischen den beiden Maschinenteil mindestens zwei zweistufige Parallelogrammlenkeranordnungen vorgesehen sein, die an beabstandeten Orten um parallel zueinander verlaufende Schwenkachsen verschwenkbar an dem zweiten Maschinenteil gelagert sind. Dabei darf das erste Maschinenteil nur an dem freien Ende einer einzigen Paralleogrammlenkeranordnung starr angeordnet sein. Zumindest zwischen jeder weiteren Parallelogrammlenkeranordnung und dem ersten Maschinenteil muß eine senkrecht zu der Schwenkachse der gesamten Parallelogrammlenkeranordnung und dem zweiten Maschinenteil verlaufende Schwenkachse vorliegen.

Vorzugsweise sind die Parallelogrammlenkeranordnungen bezüglich ihrer Schwenkachsen jeweils in einer Höhe an dem ersten und dem zweiten Maschinenteil gelagert. Diese Höhen verlaufen weiterhin vorzugsweise mit Abstand zu den Punkten, in denen die Positionierelemente an dem ersten und dem zweiten Maschinenteil gelagert sind. Auf diese Weise wird einer Kollision zwischen den Positionierelementen und den Parallelogrammlenkeranordnungen der Führung entgegengewirkt.

In dieselbe Richtung zielt die Maßnahme, die Parallelogrammlenkeranordnungen bezüglich einer Projektion in Richtung ihrer Schwenkachsen versetzt zu den Postitionierelementen anzuordnen.

Jede Parallelogrammlenkeranordnung sollte insgesamt länger sein als der maximale Abstand des ersten Maschinenteils von dem Ort, an dem die jeweilige Parallelogrammlenkeranordnung verschwenkbar an dem zweiten Maschinenteil gelagert ist. Das heißt, jede Parallelogrammlenkeranordnung behält eine einmal gegebene Knickstellung bei und schwingt nicht durch. Damit ist jedem Ort des ersten Maschinenteils gegenüber dem zweiten Maschinenteil genau eine Stellung jeder Parallelogrammlenkeranordnung zugeordnet. Hierdurch wird die Präzision der Führung durch die Parallelogrammlenkeranordnungen optimiert.

Mindestens eine Parallelogrammlenkeranordnung kann durch eine Kraft beaufschlagt sein, deren resultierende Kräfte die Positionierelemente auf Zug belasten. Durch die Zugbelastung der Positionierelemente können diese besonders leicht und damit schnell und kostengünstig ausgebildet werden, weil der größte Aufwand bei linearen Positionierelementen normalerweise zu betreiben ist, um ein Durchbiegen oder Durchknicken unter Druckbelastung zu vermeiden. Eine eindeutige Stellung der Parallelogrammlenkeranordnungen ergibt bei der Kraftbeaufschlagung der Parallelogrammlenkeranordnungen auch eine eindeutige Kraft auf die Positionierelemente für jeden Ort des ersten Maschinenteils gegenüber dem zweiten Maschinenteil.

Bei den Positionierelementen der neuen Vorrichtung handelt es sich um schnelle lineare Positionierelemente, mit denen der lineare Abstand der zwei Maschinenteile zwischen zwei Punkten direkt veränderbar ist. Beispielsweise kann es sich um Linearmotoren, d.h. sogenannte Lineardirektantriebe handeln. Die Positionierelemente können aber auch nicht-verspannte Gewindespindeln sein. Eine Verspannung der Gewindespindel erübrigt sich durch die Zugbelastung der Positionierelemete. Nicht-verspannte Gewindespindeln bzw. entsprechende Gewindetriebe sind bei hoher Präzision kostengünstig verfügbar und weisen gegenüber anderen Positionierelementen einen besonders großen effektiven Verfahrweg auf.

Bei der neuen Vorrichtung kann das zweite Maschinenteil unterteilt sein, wobei die Positionierelemente an dem einen Teil und jede Parallelogrammlenkeranordnung an dem anderen Teil gelagert sind bzw. ist und wobei der andere Teil gegenüber dem einen Teil um eine senkrecht zu den Schwenkachsen aller Parallelogrammlenkeranordnungen verlaufende Kippachse verkippbar ist. Hierdurch wird es möglich, das erste Maschinenteil gegenüber dem zweiten Maschinenteil gezielt um die Kippachse zu verkippen, wobei die Kippstellung in dem gesamten Verfahrbereich des ersten Maschinenteils konstant bleibt. Es ist auch denkbar, daß der andere Teil des zweiten Maschinenteils gegenüber dem einen Teil um zwei senkrecht zueinander verlaufende Kippachsen unabhängig voneinander verkippbar ist, dann können beliebige Kippwinkel für das erste Maschinenteil im Raum eingestellt werden.

Die Erfindung wird im folgenden anhand von Ausführungsbeispielen näher erläutert und beschrieben. Dabei zeigt
- Figur 1: eine erste Ausführungsform der Vorrichtung zur Positionierung eines ersten Maschinenteils gegenüber einem zweiten Maschinenteil in einer teilweisen Seitenansicht,
- Figur 2: eine Draufsicht auf die Vorrichtung gemäß Figur 1 und
- Figur 3: einen Kugelgewindetrieb zur Verwendung bei der Vorrichtung gemäß den Figuren 1 und 2 .

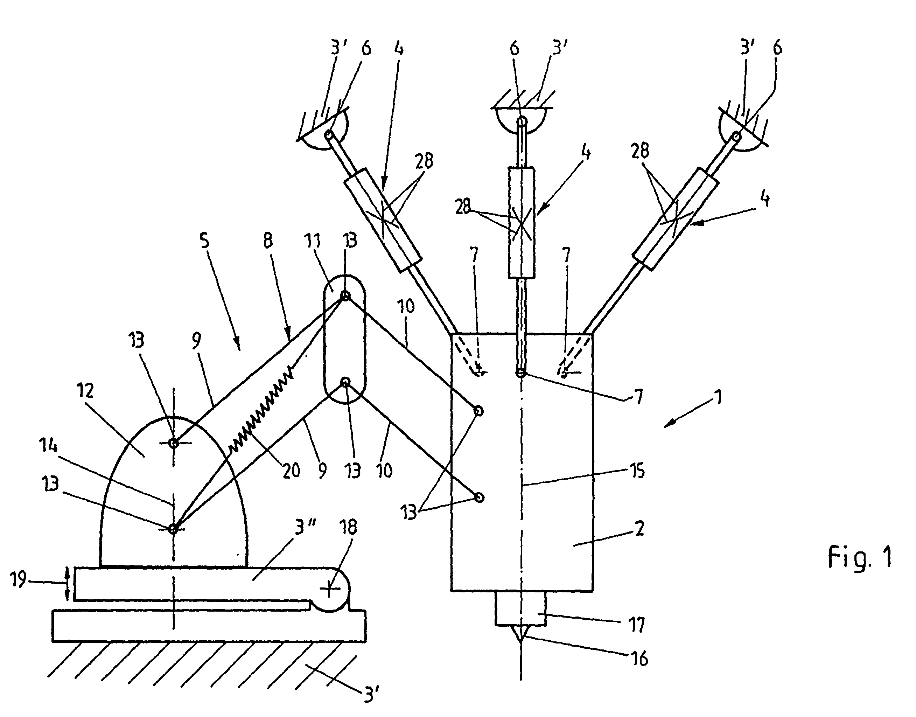

Aus Figur 1 geht eine Vorrichtung 1 hervor, die zur Positionierung eines ersten Maschinenteils 2 gegenüber einem zweiten Maschinenteil 3 vorgesehen ist. Das Maschinenteil 3 weist hier zwei Teile 3' und 3'' auf, worauf noch näher eingegangen werden wird. Zwischen dem ersten Maschinenteil 2 und dem zweiten Maschinenteil 3 sind einerseits drei Positionierelemente 4 und andererseits eine Führung 5 angeordnet. Die Positionierelemente 4 sind in Punkten 6 frei im Raum verschwenkbar an dem zweiten Maschinenteil 3 gelagert und greifen in Punkten 7 an dem ersten Maschinenteil 2 an. In den Punkten 7 sind die Positionierelemente 4 frei im Raum verschwenkbar an dem ersten Maschinenteil 2 gelagert. Bei den Positionierlementen 4 kann es sich um Kugelgewindetriebe, Lineardirektantriebe oder andere auf lineare Längenänderungen zwischen dem ersten Maschinenteil 2 und dem zweiten Maschinenteil 3 ansteuerbare Positionierelemente handeln. Die Führung 5 weist eine Parallelogrammlenkeranordnung 8 auf. Die Parallelogrammlenkeranordnung 8 ist zweistufig ausgebildet und weist zwei hintereinandergeschaltete Paare von Parallelogrammlenkern 9 und 10 auf. Zwischen den Parallelogrammlenkern 9 und 10 ist ein Querlenker 11 angeordnet. Darüberhinaus weisen ein Sockel 12 und das erste Maschinenteil 2 die Funktion von weiteren Querlenkern auf. Die Parallelogrammlenker 9 und 10 sind gegenüber dem Querlenker 11, dem Sockel 12 und dem ersten Maschinenteil 2 um parallel zueinander verlaufende Schwenkachsen 13 verschwenkbar. Eine weitere Verschwenkbarkeit der Parallelogrammlenker 10 ist gegenüber dem ersten Maschinenteil 2 nicht gegeben. Die Parallelogrammlenker 9 sind jedoch gemeinsam mit dem Sockel 12 um eine senkrecht zu den Schwenkachsen 13 verlaufende Schwenkachse 14 gegenüber dem zweiten Maschinenteil 3 verschwenkbar. Die Schwenkachse 14 schneidet hier beide Schwenkachsen 13 zwischen dem Parallelogrammlenker 9 und dem Sockel 12. Aufgrund der Ausrichtung der Schwenkachsen 13 und 14 und der Anordnung der Parallelogrammlenker 9 und 10 mit dem Querlenker 11 kann das erste Maschinenteil 2 gegenüber dem zweiten Maschinenteil 3 dreidimensional verfahren werden. Eine Verkippung gegenüber der Schwenkachse 14 der gesamten Parallelogrammlenkeranordnung 5 ist jedoch nicht möglich. Ein Verschwenken um die Schwenkachse 14 bzw. um eine parallele Längsachse 15 des zweiten Maschinenteils 3 ist umgekehrt zwar mit jedem Verfahren des zweiten Maschinenteils 3 senkrecht zur Zeichenebene verbunden, aber beispielsweise völlig unerheblich, wenn das zweite Maschinenteil 2 eine ein Werkzeug 16 tragende Spindel 17 aufweist, die um die Längsachse 15 umläuft. Ein Verkippen des ersten Maschinenteils 2 gegenüber dem zweiten Maschinenteil 3 in der Zeichenebene ist nur durch die zweiteilige Ausbildung des zweiten Maschinenteils 3 möglich, wobei an einem Teil 3' die Positionierelemente 4 gelagert sind und ein anderer Teil 3'' zusammen mit dem Sockel 12 um eine Kippachse 18 gegenüber dem einen Teil 3' in Richtung eines Pfeils 19 verkippbar ist. Die resultierende Verkippung des zweiten Maschinenteils 3 ist über dessen gesamten dreidimensionalen Verfahrbereich konstant. Die Parallelogrammlenker 9 und 10 sind zusammen länger als der maximale Abstand des ersten Maschinenteils 2 von der Schwenkachse 14 der gesamten Parallelogrammlenkeranordnung 8, so daß die Parallelogrammlenkeranordnung 8 immer nach oben durchgeknickt ist. Jeder Position des zweiten Maschinenteils 3 im Verfahrraum ist damit eine bestimmte Stellung der Parallelogrammlenkeranordnung 8 zugeordnet. Eine Feder 20 beaufschlagt die Parallelogrammlenkeranordnung 8 derart, daß das erste Maschinenteil 2 von den Punkten 6, an denen die Positionierelemente 4 an dem zweiten Maschinenteil 3 gelagert sind, weggezogen wird. Die Positionierelemente 4 werden im Ergebnis auf nur Zug beansprucht, was durch Pfeilspitzen 28 angedeutet ist. Durch die ausschließliche Beanspruchung der Positionierelemente 4 auf Zug besteht auch bei einer Vergrößerung ihrer Länge keine Gefahr eines Durchbiegens oder gar Durchknickens. Die Vorrichtung 1 gemäß Figur 1 zeichnet sich durch eine sehr schnelle Beschleunigung und Verfahrbarkeit des ersten Maschinenteils 2 gegenüber dem zweiten Maschinenteil 3 in dem Verfahrraum aus. Die Führung 5 weist dabei zwar eine Mehrzahl von einzelnen Bestandteilen auf. Diese sind jedoch von einfachem mechanischen Aufbau.

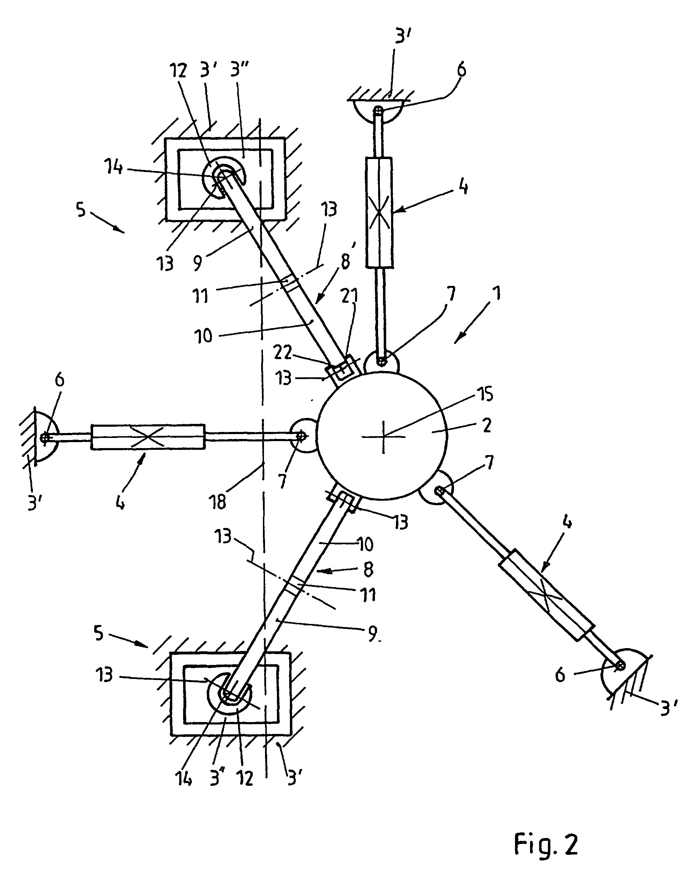

Figur 2 zeigt eine Draufsicht auf die Vorrichtung 1 gemäß Figur 1. Aus dieser Draufsicht ist zu erkennen, daß die Führung 5 neben der Parallelogrammlenkeranordnung 8 gemäß Figur 1 eine weitere Parallelogrammlenkeranordnung 8' aufweist. Diese Parallelogrammlenkeranordnung 8' entspricht der Parallelogrammlenkeranordnung 8 bis auf die Tatsache, daß an ihrem freien Ende ein weitere Querlenker 21 angeordnet ist, der um eine parallel zu der Schwenkachse 14 verlaufende Schwenkachse 22 verschwenkbar an dem ersten Maschinenteil 2 gelagert ist. Dies ist erforderlich, damit das zweite Maschinenteil 2 seine Beweglichkeit in der Zeichenebene der Figur 2 bei der steifen Ausbildung der Parallelogrammlenker 9 und 10 und deren Lagerung beibehält. Der Sockel 14 beider Parallelogrammlenkeranordnung 8 und 8' sind gemeinsam um die Kippachse 18 verschwenkbar, um das erste Maschinenteil 2 gegenüber dem ersten Maschinenteil 3 zu verkippen. Während aus Figur 1 zu entnehmen war, daß die Führung 5 unterhalb der Punkte 6 angeordnet ist, an denen die drei Positionierelemente 4 an dem zweiten Maschinenteil 3 gelagert sind, ergibt sich aus Figur 2, daß die Parallelogrammlenkeranordnung 8 in Blickrichtung der parallelen Schwenkachsen 14 und 22 um die dazu parallel verlaufende Längsachse 15 des ersten Maschinenteils 2 um 60° versetzt zu den Positionierelementen 4 angeordnet sind. D.h. es ist eine wechselseitige Anordnung "auf Lücke". So wird eine Kollision der Positionierelemente 4 mit den Parallelogrammlenkeranordnungen 8 und 8' möglichst weitgehend vermieden. Dies ist wichtig, um einen möglichst großen effektiven Verfahrbereich des ersten Maschinenteils 2 gegenüber dem zweiten Maschinenteil 3 zu erhalten.

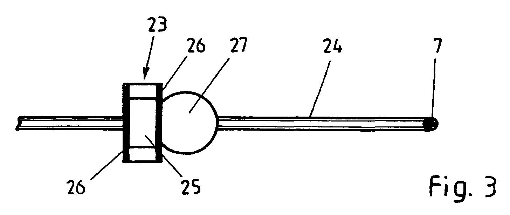

Figur 4 skizziert einen Kugelgewindetrieb 23 zur Verwendung bei der Vorrichtung 1 gemäß den Figuren 1 und 2 als Positioniervorrichtung 4. Der Kugelgewindetrieb 23 weist eine Kugelgewindespindel 24 auf, auf der eine Mutter 25 angeordnet ist. Die Mutter 25 wird zum Betätigen des Kugelgewindetriebs 23 durch einen hier nicht dargestellten Motor angetrieben und ist in achsialer Richtung der Kugelgewindespindel 24 durch ein Lager 26 abgestütz. Die Kugelgewindespindel 24 selbst ist um ihre Längsachse drehfest angeordnet. Durch Verdrehen der Mutter 25 mit dem nicht dargestellten Motor ändert sich so die effektive Länge der Kugelgewindespindel 24 zwischen einem Punkt 7, in dem die Kugelgewindespindel 24 an dem hier nicht dargestellten ersten Maschinenteil 2 gemäß den Figuren 1 und 2 angreift, und einem Schwenklager, in dem jeweiligen Punkt 6 an dem zweiten Maschinenteil 3 gelagert ist. Bestandteil des Schwenklagers ist ein Kugelkopf 27 der in hier nicht dargestellten Lagerschalen verschwenkbar gelagert ist. Durch den Kugelkopf 27 tritt die Kugelgewindespindel 24 mittig hindurch. Gleichzeitig ist an dem Kugelkopf 27 das Lager 26 für die Mutter 25 auf der Kugelgewindespindel 24 abgestützt. Die Kugelgewindespindel 24 wird durch die Feder 20 gemäß Figur 1 bei der Vorrichtung 1 nur auf Zug beansprucht. Es ist daher zur Vermeidung von Spiel bei einer Gangumkehr nicht erforderlich, die Kugelgewindespindel 24 in der Mutter 25 zu verspannen. Das heißt der Kugelgewindetrieb 23 gemäß Figur 3 kann einen recht einfachen und damit kostengünstigen Aufbau aufweisen, ohne daß die Präzision und Geschwindigkeit der Positionierung bei der Vorrichtung 1 beeinträchtigt wird.

### BEZUGSZEICHENLISTE

- 1 -: Vorrichtung
- 2 -: erster Maschinenteil
- 3 -: zweiter Maschinenteil
- 4 -: Positionierelement
- 5 -: Führung
- 6 -: Punkt
- 7 -: Punkt
- 8 -: Parallelogrammlenkeranordnung
- 9 -: Parallelogrammlenker
- 10 -: Parallelogrammlenker

- 11 -: Querlenker
- 12 -: Sockel
- 13 -: Schwenkachse
- 14 -: Schwenkachse
- 15 -: Längsachse
- 16 -: Werkzeug
- 17 -: Spindel
- 18 -: Kippachse
- 19 -: Pfeil
- 20 -: Feder

- 21 -: Querlenker
- 22 -: Schenkachse
- 23 -: Kugelgewindetrieb
- 24 -: Kugelgewindespindel
- 25 -: Mutter
- 26 -: Lager
- 27 -: Kugelkopf
- 28 -: Pfeilspitze

## Patentansprüche

1. Vorrichtung (1) zur Positionierung eines ersten Maschinenteils (2) gegenüber einem zweiten Maschinenteil (3', 3"), wobei mindestens drei Positionierelemente (4) in verschiedenen Punkten (6) an dem zweiten Maschinenteil (3') im Raum verschwenkbar gelagert sind, wobei die Positionierelemente (4) an dem ersten Maschinenteil (2) angreifen und auf eine lineare Längenänderung zwischen dem ersten und dem zweiten Maschinenteil ansteuerbar sind und wobei eine Führung (5) für das erste Maschinenteil (2) gegenüber dem zweiten Maschinenteil (3', 3") vorgesehen ist, die zwischen den beiden Maschinenteilen (2, 3) mindestens eine mindestens zweistufige Parallelogrammlenkeranordnung (8) mit um parallel zueinander verlaufende Schwenkachsen verschwenkbaren Parallelogrammlenkern (9, 10) aufweist, die als ganzes um eine zu den Schwenkachsen der Parallelogrammlenker (9, 10) senkrecht verlaufende Schwenkachse verschwenkbar an dem zweiten Maschinenteil (3', 3") gelagert ist und an deren freien Ende das erste Maschinenteil angeordnet ist, **dadurch gekennzeichnet, daß** die Parallelogrammlenker (9, 10) der Parallelogrammlenkeranordnung (8) nur um ihre parallel zueinander verlaufenden Schwenkachsen (13) gegenüber dem ersten Maschinenteil (2) verschwenkbar sind und daß jeder Position des ersten Maschinenteils (2) im Verfahrraum eine bestimmte Stellung der Parallelogrammlenkeranordnung (8) zugeordnet ist.

2. Vorrichtung nach Anspruch 1, **dadurch gekennzeichnet, daß** drei oder vier Positionierelemente (4) vorgesehen sind.

3. Vorrichtung nach Anspruch 1 oder 2, **dadurch gekennzeichnet, daß** die Punkte (6), in denen mindestens drei Positionierelemente (4) an dem zweiten Maschinenteil (3) gelagert sind, eine Ebene definieren, die senkrecht zu der Schwenkachse (14) verläuft, um die die Parallelogrammlenkeranordnung (8) als ganzes gegenüber dem zweiten Maschinenteil (3) verschwenkbar ist.

4. Vorrichtung nach einem der Ansprüche 1 bis 3, **dadurch gekennzeichnet, daß** die Führung (5) zwischen den beiden Maschinenteilen (2, 3) mindestens zwei zweistufige Parallelogrammlenkeranordnungen (8, 8') aufweist, die an beabstandeten Orten um parallel zueinander verlaufende Schwenkachsen (14) verschwenkbar an dem zweiten Maschinenteil (3) gelagert sind.

5. Vorrichtung nach einem der Ansprüche 1 bis 4, **dadurch gekennzeichnet, daß** die Parallelogrammlenkeranordnungen (8, 8') bezüglich ihrer Schwenkachsen (14) mit Abstand zu den Punkten (6), in denen die Positionierelemente (4) an dem zweiten Maschinenteil (3) gelagert sind, an dem zweiten Maschinenteil (3) gelagert sind.

6. Vorrichtung nach einem der Ansprüche 1 bis 5, **dadurch gekennzeichnet, daß** die Parallelogrammlenkeranordnungen (8, 8') bei Betrachtung in Richtung ihrer Schwenkachsen (14) jeweils in dem Freiraum zwischen zwei Positionierelementen (4) angeordnet sind.

7. Vorrichtung nach einem der Ansprüche 1 bis 6, **dadurch gekennzeichnet, daß** jede Parallelogrammlenkeranordnung (8, 8') insgesamt länger ist als der maximale Abstand des ersten Maschinenteils (2) von dem Ort, an dem die jeweilige Parallelogrammlenkeranordnung (8, 8') verschwenkbar an dem zweiten Maschinenteil (3) gelagert ist.

8. Vorrichtung nach einem der Ansprüche 1 bis 7, **dadurch gekennzeichnet, daß** mindestens eine Parallelogrammlenkeranordnung (8) durch eine Kraft beaufschlagt ist, deren resultierenden Kräfte die Positionierelemente (4) auf Zug belasten.

9. Vorrichtung nach einem der Ansprüche 1 bis 8, **dadurch gekennzeichnet, daß** die Positionierelemente (4) nicht-verspannte Gewindespindeln (24) sind.

10. Vorrichtung nach einem der Ansprüche 1 bis 9, **dadurch gekennzeichnet, daß** das zweite Maschinenteil (3) unterteilt ist, wobei die Positionierelemente (4) an dem einen Teil (3') und jede Parallelogrammlenkeranordnung (8, 8') an dem anderen Teil (3") gelagert sind bzw. ist und wobei der andere Teil (3") gegenüber dem einen Teil (3') um eine senkrecht zu den Schwenkachsen (14) aller Parallelogrammlenkeranordnungen (8, 8') verlaufende Kippachse (18) verkippbar ist.

## Claims

1. Device (1) for positioning a first machine part (2) with regard to a second machine part (3', 3"), at least three positioning elements (4) being attached to the second machine part (3') in different points (6) so that they may be three-dimensionally swivelled, the positioning elements (4) engaging the first machine part (2) and being operatable with regard to a linear change in length between the first and the second machine part, and a guiding mechanism (5) being provided for the first machine part (2) with regard to the second machine part (3', 3") which guiding mechanism comprises at least one at least two-stage lever arm arrangement (8) having lever arms (9, 10) swivelling about swivelling axes running in parallel to reach other, which guiding mechanism is attached to the second machine part (3', 3") as a whole swivelling about a swivelling axis normal to the swivelling access of the lever arms (9, 10), and the first machine part is arranged at the free end of which guiding mechanism, **characterized in that** the lever arms (9, 10) of the lever arm arrangement (8) are only swivelling with regard to the first machine part (2) about their swivelling axes (13) running in parallel to each other, and that a defined position of the lever arm arrangement (8) is assigned to each position of the first machine part (2) within the operation space.

2. The device of claim 1, **characterized in that** three or four positioning elements (4) are provided.

3. The device of claim 1 or 2, **characterized in that** the points (6), in which the at least three positioning elements (4) are attached to the second machine part (3), are defining a plane which runs normal to the swivelling axis (14) about which the lever arm arrangement (8) is as a whole swivelling with regard to the second machine part (3).

4. The device of any of the claims 1 to 3, **characterized in that** the guiding mechanism (5) comprises at least two two-stage lever arm arrangements (8, 8') between the two machine parts (2, 3), which are attached to the second machine part (3) at places at a distance with regard to each other and swivelling about swivelling axes (14) running in parallel to each other.

5. The device of any of the claims 1 to 4, **characterized in that** the lever arm arrangements (8, 8'), with regard to their swivelling axes (14) are attached to the second machine part (3) at a distance to the points (6) in which the positioning elements (4) are attached to the second machine part (3).

6. The device of any of the claims 1 to 5, **characterized in that** the lever arm arrangements (8, 8') are each arranged in the free spaces between two positioning elements (4), if viewed in the direction of their swivelling axes (14).

7. The device of any of the claims 1-6, **characterized in that** each lever arm arrangement (8, 8') is longer in total than the maximum distance of the first machine part (2) from the place at which the respective lever arm arrangement (8, 8') is in a swivelling way attached to the second machine part (3).

8. The device of any of the claims 1 to 7, **characterized in that** at least one lever arm arrangement (8) is biased by a force, the resulting forces of which pose a pulling load on the positioning elements (4).

9. The device of any of the claims 1 to 8, **characterized in that** the positioning elements (4) are unloaded ball spindles (24).

10. The device of any of the claims 1 to 9, **characterized in that** the second machine part (3) is subdivided, the positioning elements (4) being attached to the one part (3') and each lever arm arrangement (8, 8') being attached to the other part (3"), and the other part (3") being tiltable with regard to the one part (3') about a tilting axis (18) running normal to the swivelling axes (14) of all lever arm arrangements (8, 8').

## Revendications

1. Dispositif (1) pour positionner une première partie de machine (2) par rapport à une deuxième partie de machine (3', 3"), dans lequel au moins trois éléments de positionnement (4) sont montés pivotants dans l'espace en différents points (6) sur la deuxième partie de machine (3'), dans lequel les éléments de positionnement (4) agissent sur la première partie de machine (2) et peuvent être commandés pour une première variation linéaire de la longueur entre la première et la deuxième partie de machine, et dans lequel il est prévu un guide (5) pour la première partie de machine (2) par rapport à la deuxième partie de machine (3', 3") lequel comporte, entre les deux parties de machine (2, 3), au moins un agencement de bras oscillants de parallélogramme à deux étages (8) avec des bras oscillants de parallélogramme (9, 10) pouvant pivoter autour d'axes de pivotement s'étendant parallèlement l'un à l'autre, lequel agencement est monté sur la deuxième partie de machine (3', 3") comme un tout de manière à pouvoir pivoter autour d'un axe de pivotement s'étendant perpendiculairement aux axes de pivotement des bras oscillants de parallélogramme (9, 10), et à son extrémité libre est disposée la première partie de machine, **caractérisé en ce que** les bras oscillants de parallélogramme (9, 10) de l'agencement de bras oscillants de parallélogramme (8) ne peuvent pivoter par rapport à la première partie de machine (2) qu'autour de leurs axes de pivotement (13) s'étendant parallèlement l'un à l'autre, et **en ce qu'**à chaque position de la première partie de machine (2) est associée dans l'espace de déplacement une position déterminée de l'agencement de bras oscillants de parallélogramme (8).

2. Dispositif selon la revendication 1, **caractérisé en ce que** trois ou quatre éléments de positionnement (4) sont prévus.

3. Dispositif selon la revendication 1 ou 2, **caractérisé en ce que** les points (6), auxquels sont montés au moins trois éléments de positionnement (4) sur la deuxième partie de machine (3), définissent un plan qui s'étend perpendiculairement à l'axe de pivotement (14) autour duquel l'agencement de bras oscillants de parallélogramme (8) peut pivoter comme un tout par rapport à la deuxième partie de machine (3).

4. Dispositif selon l'une des revendications 1 à 3, **caractérisé en ce que** le guide (5) entre les deux parties de machine (2, 3) comporte au moins deux agencements de bras oscillants de parallélogramme (8, 8') à deux étages, qui sont montés, en des emplacements espacés sur la deuxième partie de machine (3), de manière à pouvoir pivoter autour d'axes de pivotement (14) s'étendant parallèlement l'un à l'autre.

5. Dispositif selon l'une des revendications 1 à 4, **caractérisé en ce que** les agencements de bras oscillants de parallélogramme (8, 8') sont montés sur la deuxième partie de machine (3), par rapport à leurs axes de pivotement (14), à distance des points (6) auxquels les éléments de positionnement (4) sont montés sur la deuxième partie de machine (3).

6. Dispositif selon l'une des revendications 1 à 5, **caractérisé en ce que** les agencements de bras oscillants de parallélogramme (8, 8') sont disposés chacun dans l'espace libre entre deux éléments de positionnement (4), lorsqu'on les observe dans la direction de leurs axes de pivotement (14).

7. Dispositif selon l'une des revendications 1 à 6, **caractérisé en ce que** chaque agencement de bras oscillants de parallélogramme (8, 8') est plus long dans l'ensemble que la distance maximale de la première partie de machine (2) par rapport à l'emplacement auquel l'agencement de bras oscillants de parallélogramme (8, 8') considéré est monté pivotant sur la deuxième partie de machine (3).

8. Dispositif selon l'une des revendications 1 à 7, **caractérisé en ce qu'**au moins un agencement de bras de parallélogramme (8) est soumis à l'action d'une force dont les forces résultantes sollicitent en traction les éléments de positionnement (4).

9. Dispositif selon l'une des revendications 1 à 8, **caractérisé en ce que** les éléments de positionnement (4) sont des broches filetées (24) non contraintes.

10. Dispositif selon l'une des revendications 1 à 9, **caractérisé en ce que** la deuxième partie de machine (3) est divisée, les éléments de positionnement (4) étant montés sur une partie (3') et chaque agencement de bras oscillants de parallélogramme (8, 8') étant monté sur l'autre partie (3"), et l'autre partie (3") pouvant basculer par rapport à une partie (3') autour d'un axe de basculement (18) s'étendant perpendiculairement aux axes de pivotement (14) de tous les agencements de bras oscillants de parallélogramme (8, 8').
